# EUROPÄISCHE PATENTSCHRIFT

(11) **EP 2 451 306 B1**
(45) Veröffentlichungstag und Bekanntmachung des Hinweises auf die Patenterteilung: **23.07.2014**
(21) Anmeldenummer: 11755008.7
(22) Anmeldetag: 30.08.2011
(51) Int. Cl.: A45C 15/06, A45D 42/10, F21V 23/04

(54) **BELEUCHTUNGSEINREICHTUNG**
ILLUMINATING DEVICE
DISPOSITIF D'ÉCLAIRAGE

(30) Priorität: 03.09.2010 DE 102010044320
(43) Veröffentlichungstag der Anmeldung: 16.05.2012
(60) Teilanmeldung: 13194484.5
(73) Patentinhaber: Schrims GmbH, 61169 Friedberg (DE)
(72) Erfinder: SCHECH, Christian, 64732 Bad König (DE); WETZEL, Bastian, 50126 Bergheim (DE)
(74) Vertreter: Metten, Karl-Heinz
(86) Internationale Anmeldenummer: PCT/EP2011/004358
(87) Internationale Veröffentlichungsnummer: WO 2012/028295

(56) Entgegenhaltungen:
- DE-U1- 9 114 298
- DE-U1- 9 415 106
- KR-U- 20100 007 721
- US-A1- 2005 078 481
- US-A1- 2008 083 627

## Beschreibung

Die Erfindung betrifft eine Beleuchtungseinrichtgung, die auch bei ihrem Transport in Betrieb nehmbar ist und in einem öffenbaren und wieder verschließbaren Gegenstand anordenbar oder angeordnet ist, mit mindestens einer ersten Lichtquelle, einem elektrischen Energiespeicher und einer Schaltervorrichtung, die eine eine Sensoreinheit umfassende Steuereinheit aufweist, mit der bei Berühren eines ersten Sensormittels der Sensoreinheit und/oder bei Erfassen einer Bewegung durch das erste Sensormittel, eine erste Schalteinheit von einem offenen Schaltzustand in einen geschlossenen Schaltzustand überführbar ist oder überführt wird, in welchem die erste Lichtquelle durch den elektrischen Energiespeicher mit elektrischer Energie versorgbar ist oder versorgt wird.

Eine nicht gattungsgemäße Beleuchtungseinrichtung ist bekannt aus DE 20 2007 011 357 U1, bei der die Beleuchtungseinrichtung in einem nicht öffenbaren Gegenstand angeordnet ist. Die Lichtquelle wird durch eine Bewegung oder durch ein Berühren aktiviert. Hierbei hat es sich als nachteilig herausgestellt, dass die Beleuchtungseinrichtung, wenn sie beispielsweise in einer Handtasche angeordnet ist, ungewollt durch sich in der Tasche befindliche Gegenstände aktiviert werden kann, was zu einem schnellen Entladen des Energiespeichers führt.

Darüber hinaus sind nicht gattungsgemäße Beleuchtungseinrichtungen, beispielsweise für tragbare Schminkspiegel, bekannt, bei denen eine Lichtquelle aktiviert wird, wenn der öffenbare und wieder verschließbare Gegenstand geöffnet wird. Hierbei hat es sich als störend erwiesen, dass der Gegenstand, wenn es sich beispielsweise in einer Damenhandtasche befindet, oft erst nach langer Suche auffindbar ist.

Aufgabe der Erfindung ist, eine Beleuchtungseinrichtung vorzuschlagen, die die oben genannten Nachteile nicht aufweist.

Diese Aufgabe wird durch eine erfindungsgemäße Beleuchtungseinrichtung nach Anspruch 1 gelöst, bei der die Sensoreinheit ein zweites Sensormittel aufweist, das zumindest erkennt, ob der öffenbare und wieder verschließbare Gegenstand offen oder geschlossen ist und dass die Steuereinheit eine zweite Schalteinheit von einem offenen Schaltzustand in einen geschlossenen Schaltzustand überführbar ist oder überführt wird, in welchem die erste Lichtquelle und/oder eine zweite Lichtquelle durch den elektrischen Energiespeicher mit elektrischer Energie versorgbar ist.

Hierdurch wird gewährleistet, dass die Beleuchtungseinrichtung auch dann aktiviert wird, wenn der Gegenstand geöffnet wird. Die erste Lichtquelle wird aktiviert, sobald ein Benutzer sich dem Gegenstand nähert oder ihn berührt. Hierdurch beleuchtet der Gegenstand seine Umgebung und wird erkennbar. Wenn der Gegenstand in einer Handtasche angeordnet ist und ein Benutzer in dieser nach etwas sucht, wird das Suchen, insbesondere die damit verbundene Bewegung erkannt und die erste Lichtquelle mit Energie versorgt. Hierdurch ist der öffenbare und wieder verschließbare Gegenstand sowohl selbst leicht erkennbar, als auch die ihn umgebenden Gegenstände.

Wird dann der öffenbare und wieder verschließbare Gegenstand von dem Benutzer geöffnet, wird die erste Lichtquelle und/oder die zweite Lichtquelle mit elektrischer Energie versorgt. Dieses ermöglicht es dem Benutzer einen Inhalt des öffenbaren und wieder verschließbaren Gegenstands zu erkennen. Wenn in dem Gegenstand ein Spiegel angeordnet ist, kann sich solchenfalls ein Benutzer auch bei Dunkelheit in diesem durch die erste und/oder zweite Lichtquelle erkennen.

Das Dokument DE 9 415 106 U1 offenbart den Gegenstand des Oberbegriffs des Anspruchs 1.

Der öffenbare und wieder verschließbare Gegenstand kann aus zwei kalottenartigen Gehäuseteilen gebildet sein, die mittels eines Gelenks auf- und zuklappbar sind.

Das zweite Sensormittel kann grundsätzlich beliebig ausgebildet sein und beispielsweise einen Berührkontakt umfassen, der getrennt wird, wenn der öffenbare und wieder verschließbare Gegenstand geöffnet wird, und der wieder geschlossen wird, wenn der öffenbare und wiederverschließbare Gegenstand geschlossen wird. Es erweist sich allerdings als vorteilhaft, wenn das zweite Sensormittel der Sensoreinheit einen Schalterdrücker und/oder einen Hall-Sensor und/oder einen Read-Kontakt umfasst. Solchenfalls lässt sich das Öffnen und Schließen des öffenbaren und wieder verschließbaren Gegenstands auf einfache Weise durch die Sensoreinheit feststellen.

Grundsätzlich ist es denkbar, dass das erste Sensormittel der Sensoreinheit derart beliebig ausgebildet sein kann, dass es ein sich Nähern bzw. ein Berühren durch einen Benutzer erfasst. Es erweist sich allerdings als vorteilhaft, wenn das erste Sensormittel der Sensoreinheit derart ausgebildet ist, dass es auch eine Änderung der Helligkeit erfassen kann und insbesondere einen Helligkeitssensor umfasst. Hierdurch ist ermöglicht, dass die Beleuchtungseinrichtung, beispielsweise wenn sie in einer Damenhandtasche angeordnet ist, erst dann aktiviert wird, wenn sie das Öffnen der Tasche durch eine damit verbundene Änderung der Helligkeit innerhalb der Tasche erfasst. Hierdurch lässt sich die im elektrischen Energiespeicher vorhandene Energie effizienter nutzen.

In Weiterbildung letztgenannten Erfindungsgedankens erweist es sich als vorteilhaft, wenn die Steuereinheit die erste Schalteinheit erst dann freigibt, wenn das erste Sensormittel der Sensoreinheit ein Unterschreiten einer Lichtstärke von 100 Lux, bevorzugt 80 Lux, bevorzugt 50 Lux, bevorzugt 40 Lux freigibt. Hierdurch ist gewährleistet, dass der Benutzer erst dann Unterstützung durch die Beleuchtungseinrichtung erfährt, wenn die vorherrschende Helligkeit die oben genannte Helligkeitswerte unterschreitet. Hierdurch lässt sich Effizienz der Nutzung der im Energiespeicher verfügbaren elektrischen Energie weiter steigern.

Bei einer weiteren Ausführungsform der Erfindung ist vorgesehen, dass das erste Sensormittel der Sensoreinheit funktional der ersten Lichtquelle und das zweite Sensormittel der Sensoreinheit funktional der zweiten Lichtquelle zugeordnet ist und dass die Steuereinheit derart ausgebildet ist, dass sie die erste Schalteinheit von einem geschlossenen Schaltzustand in einen offenen Schaltzustand überführt, wenn die zweite Schalteinheit von einem offenen Schaltzustand in einen geschlossenen Schaltzustand überführt wird.

Bevorzugt ist die erste Lichtquelle in dem öffenbaren und wieder verschließbaren Gegenstand derart angeordnet, dass sie an dessen Oberfläche oder durch dessen Oberfläche nach Außen scheint. Hingegen ist die zweite Lichtquelle derart in dem öffenbaren und wieder verschließbaren Gegenstand angeordnet, dass sie beim Öffnen des öffenbaren und wieder verschließbaren Gegenstands dessen Inhalt beleuchtet. Solchenfalls hat der Benutzer keine Verwendung mehr für das von der ersten Lichtquelle emittierte Licht. Durch das automatische Abschalten der ersten Lichtquelle, wenn die zweite Lichtquelle mit Energie versorgt wird, lässt sich die im elektrischen Energiespeicher gespeicherte Energie noch effizienter nutzen.

Darüber hinaus erweist es sich als vorteilhaft, wenn das zweite Sensormittel der Sensoreinheit einen Helligkeitssensor umfasst und wenn die Steuereinheit derart ausgebildet ist, dass sie die zweite Schalteinheit von einem geschlossenen Schaltzustand in einen offenen Schaltzustand überführt, wenn durch den Helligkeitssensor eine Helligkeit von mehr als 100 Lux, bevorzugt mehr als 80 Lux, bevorzugt mehr als 50 Lux, bevorzugt mehr als 40 Lux, erfasst wird. Solchenfalls wird Energie gespart, wenn das zweite Sensormittel der Sensoreinheit erfasst, dass die umgebende Helligkeit ausreichend ist, um den Inhalt des öffenbaren und wieder verschließbaren Gegenstands ohne zusätzliche Beleuchtung zu erkennen.

Bei einer Weiterbildung der Erfindung ist vorgesehen, dass das erste Sensormittel der Sensoreinheit ein Pyrosensor und/oder ein Kapazitivensensor und/oder ein Ultraschallsensor zum Erkennen einer Bewegung innerhalb des Gegenstands oder einer Berührung der Schaltervorrichtung umfasst. Hierdurch beginnt der Gegenstand zu leuchten, wenn ein Benutzer sich aktiv mit dem Gegenstand beschäftigt, beispielsweise, wenn der öffenbare und wieder verschließbare Gegenstand in eine Tasche reingelegt ist, der Benutzer in der Tasche etwas sucht.

Es erweist sich als vorteilhaft, wenn die Steuereinheit derart ausgebildet ist, dass die zweite Schalteinheit von dem geschlossenen Schaltzustand in den offenen Schaltzustand nach 5 bis 60 Sekunden insbesondere nach 10 bis 40 Sekunden, insbesondere nach 10 bis 30 Sekunden nach Erkennen eines Öffnens des öffenbaren und wieder verschließbaren Gegenstands durch das zweite Sensormittel der Sensoreinheit zurückführt und/oder dass die Steuereinheit derart ausgebildet ist, dass die erste Schalteinheit von dem geschlossenen Schaltzustand in den offenen Schaltzustand nach 5 bis 60 Sekunden, insbesondere nach 10 bis 40 Sekunden, insbesondere nach 15 bis 30 Sekunden nach Erfassen der letzten Bewegung durch das erste Sensormittel der Sensoreinheit zurückführt. Hierdurch ist eine Zeit einstellbar, nach der die zweite Lichtquelle automatisch ausgeschaltet wird. Dieses ist beispielsweise dann vorteilhaft, wenn ein Benutzer es vergessen hat, den öffenbaren und wieder verschließbaren Gegenstand nach einer Benutzung wieder zu verschließen.

Darüber hinaus erweist es sich als vorteilhaft, wenn die erste Lichtquelle und/oder die zweite Lichtquelle jeweils zumindest eine Glüchwendelampe, LED und/oder Leuchtfolie umfasst, insbesondere eine Mehrzahl an Glühwendellampen, LEDs und/oder Leuchtfolien umfasst.

Vorteilhafterweise umfasst die Gesamtleistung eines LEDs beziehungsweise der Gesamtheit aller LEDs 200 mW bis 300 mW. Hierdurch umfasst jede einzelne LED eine Lichtstärke von 600 mcd bis 2.200 mcd (milli-Candela).

Darüber hinaus erweist es sich als vorteilhaft, wenn die Beleuchtungseinrichtung ein durch die Steuereinheit ansteuerbaren Dimmer aufweist, mit dem die Energieversorgung der ersten Lichtquelle und/oder zweiten Lichtquelle abrupt oder kontinuierlich bis auf Null reduzierbar ist, insbesondere innerhalb von einer Sekunde bis zwei Minuten, insbesondere innerhalb von 1 Sekunde bis 90 Sekunden, insbesondere innerhalb von 10 Sekunden bis 60 Sekunden.

Es erweist sich als optisch besonders ansprechend, wenn der öffenbare und wieder verschließbare Gegenstand ein transparentes und/oder transluzentes und/oder opakes Material umfasst und dass die erste Lichtquelle und/oder die zweite Lichtquelle in das Material des öffenbaren und wieder verschließbaren Gegenstands innerhalb dieses Materials, und bevorzugt von diesem umgeben, angeordnet sind.

Darüber hinaus wird die Aufgabe durch eine erfindungsgemäße Beleuchtungseinrichtung gelöst, bei der das erste Sensormittel der Sensoreinheit einen kapazitiven Sensor umfasst.

Die Beleuchtungseinrichtung kann zusätzlich ein Anzeigeelement zum Anzeigen mindestens einer Information umfassen und/oder die erste Lichtquelle und/oder die zweite Lichtquelle ein Anzeigeelement zum Anzeigen mindestens einer Information bilden. Hierdurch ist die Einsetzbarkeit der Beleuchtungseinrichtung erhöht.

In Weiterbildung letztgenannten Erfindungsgedankens erweist es sich als vorteilhaft, wenn das Anzeigeelement über die erste Schalteinheit und/oder über die zweite Schalteinheit mit dem elektrischen Energiespeicher verbindbar ist und/oder wenn die mindestens eine Information eine Uhrzeit, ein Datum und/oder ein Signal, insbesondere akustisches Alarmsignal, umfasst.

Solchenfalls wird das Anzeigeelement bei Erfassen einer Bewegung und oder beim Berühren der Beleuchtungseinrichtung aktiviert. Wenn die Information eine Uhrzeit, ein Datum und/oder ein Signal umfasst, erfüllt die Beleuchtungseinrichtung die Funktion einer Uhr.

Ferner ist es denkbar, dass das Anzeigeelement ein akustisches, optisches und/oder haptisch wahrnehmbares Anzeigen der Information umfasst. Beispielsweise kann die Beleuchtungseinrichtung hierdurch als Radiogerät, Wiedergabegerät, insbesondere MP-3 Player, oder dergleichen Verwendung finden.

Darüber hinaus erweist es sich als zweckmäßig, wenn die Beleuchtungseinrichtung nach eine Datenspeichereinrichtung, die im oder am öffenbaren und wieder verschließbaren Gegenstand anordenbar oder angeordnet ist, umfasst und auf der mittels einer Schnittstelleneinheit mindestens einem Datum übertragbar und/oder speicherbar ist.

Der öffenbare und wieder verschließbare Gegenstand bildet eine Behältniseinrichtung zum Anordnen mindestens eines Körperelements, wie Medikamente, Zahlungsmittel, Mittel zur Körper- und Schönheitspflege und/oder sonstige Gegenstände, die in einer Handtasche anordenbar ist.

Besonderer Vorteil der erfindungsgemäßen Beleuchtungseinrichtung ist, dass sie, wenn sie beispielsweise in einer Tasche angeordnet ist, leicht auffindbar ist und die sie umgebenden Gegenstände erkennbar werden lässt.

Zudem wird eine Erkennen des Inhalts des öffenbaren und wieder verschließbaren Gegenstands wesentlich erleichtert.

Schließlich mutet mittels der Beleuchtungseinrichtung der öffenbare und wieder verschließbare Gegenstand besonders optisch ansprechend an.

Weitere Merkmale, Einzelheiten und Vorteile der Erfindung ergeben sich aus den beigefügten Patentansprüchen und der zeichnerischen Darstellungen nachfolgender Beschreibung zweier Ausführungsformen der Erfindung.

In der Zeichnung zeigen:
- Figur 1: eine schematische Darstellung der erfindungsgemäßen Beleuchtungseinrichtung;
- Figur 2: eine perspektivische Darstellung eines Kosmetikaccessoires mit einer erfindungsgemäßen Beleuchtungseinrichtung.

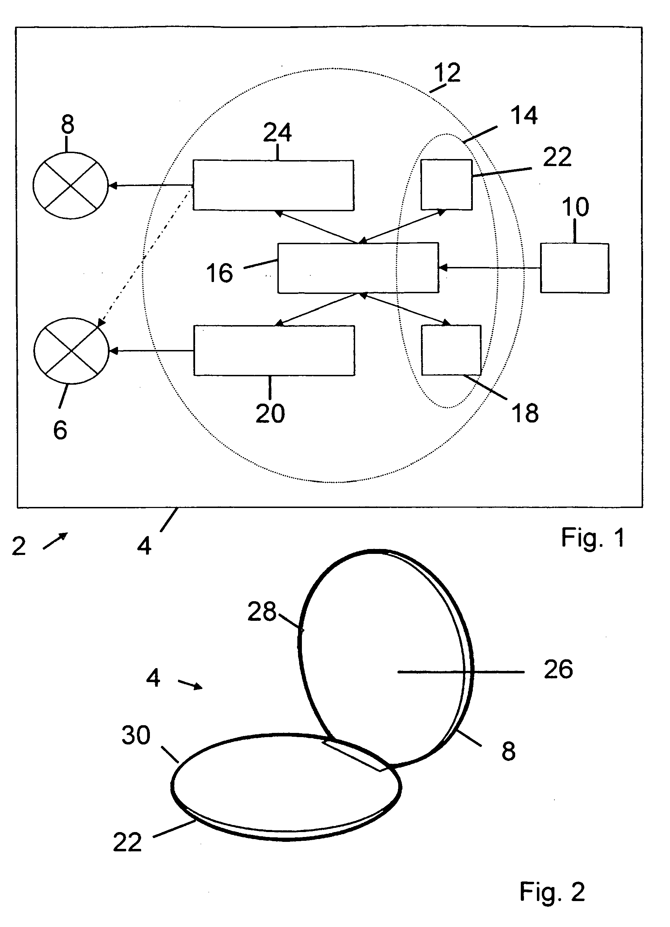

Figur 1 zeigt eine schematische Darstellung der insgesamt mit dem Bezugszeichen 2 versehenen Beleuchtungseinrichtung. Die Beleuchtungseinrichtung 2 ist in einem öffenbaren und wieder verschließbaren Gegenstand 4 angeordnet und umfasst bei dem in der Figur 1 dargestellten Ausführungsbeispiel eine erste Lichtquelle 6 und eine zweite Lichtquelle 8. Die erste Lichtquelle 6 sowie die zweite Lichtquelle 8 sind durch einen elektrischen Energiespeicher 10 mit elektrischer Energie versorgbar. Der ersten Lichtquelle 6 und der zweiten Lichtquelle 8 sowie dem elektrischen Energiespeicher 10 ist funktional eine Schaltervorrichtung 12 zwischengeschaltet die eine einer Sensoreinheit 14 umfassende Steuereinheit 16 aufweist, mit der bei Berühren eines ersten Sensormittels 18 der Sensoreinheit 14 und/oder bei Erfassen einer Bewegung durch das erste Sensormittel 18 der Sensoreinheit 14 eine erste Schalteinheit 20 von einem offenen Schaltzustand in einen geschlossenen Schaltzustand überführbar ist, in welchem die erste Lichtquelle 6 durch den elektrischen Energiespeicher 10 mit elektrischer Energie versorgbar ist. Darüber hinaus umfasst die Sensoreinheit 14 ein zweites Sensormittel 22, das zumindest erkennt, ob der öffenbare und wieder verschließbare Gegenstand 4 offen oder geschlossen ist. Wenn das zweite Sensormittel 22 erkennt, dass der öffenbare und wieder verschließbare Gegenstand offen ist, wird durch die Steuereinheit 16 eine zweite Schalteinheit 24 derart ansteuert, dass die erste Lichtquelle 6 oder die zweite Lichtquelle 8 durch den Energiespeicher 10 mit elektrischer Energie versorgt wird.

Im Folgenden wird die Funktionsweise der erfindungsgemäßen Beleuchtungseinrichtung 2 geschlidert:

Wenn sich ein Benutzer dem öffenbaren und wieder verschließbaren Gegenstand 4 nähert oder ihn berührt, wird dieses durch das erste Sensormittel 18 der Sensoreinheit 14 erfasst. Die Steuereinheit 16 steuert solchenfalls die erste Schalteinheit 20 derart an, dass diese in einen geschlossenen Schaltzustand überführt wird und die erste Lichtquelle 6 durch elektrische Energie versorgt wird und dadurch leuchtet.

Wenn der öffenbare und wieder verschließbare Gegenstand 4 geöffnet wird, wird dieses durch das zweite Sensormittel 22 der Sensoreinheit 14 erfasst. Solchenfalls wird die erste Lichtquelle 6 und/oder die zweite Lichtquelle 8 bestromt.

Figur 2 zeigt einen als Kosmetikaccessoire ausgebildeten öffenbaren und wieder verschließbaren Gegenstand 4, in dem eine Beleuchtungseinrichtung 2 angeordnet ist. Bei dem Kosmetikaccessoire kann es sich um einen aufklappbaren Schminkspiegel handeln. In Figur 2 weist dieser in der Bildebene oben eine reflektierende Oberfläche 26 auf. Um diese Oberfläche 26 herum ist die zweite Lichtquelle (8) angeordnet. Figur 2 zeigt den öffenbaren und wieder verschließbaren Gegenstand 4 in einer geöffneten Position. Die beiden den öffenbaren und wieder verschließbaren Gegenstand 4 bildenden kalottenartigen Teilkörper 28 und 30 nehmen bei dem gezeigten Ausführungsbeispiel einen rechten Winkel zueinander ein. Solchenfalls ist ein als magnetischer Schnappverschluss ausgebildetes zweites Sensormittel 22 getrennt, wodurch die zweite Lichtquelle 8 mit elektrischer Energie versorgt wird und den Inhalt des offenbaren und wieder verschließbaren Gegenstands 4 beleuchtet. Das hierdurch emittierte Licht hilft einem Benutzer sich beispielsweise in der reflektierenden Fläche 26 zu erkennen.

Beim Wiederverschließen des Gegenstands 4 wird die Energieversorgung der Lichtquelle 8 wieder unterbrochen.

## Patentansprüche

1. Beleuchtungseinrichtung (2), die auch bei ihrem Transport in Betrieb nehmbar ist und in einem öffenbaren und wieder verschließbaren Gegenstand (4) angeordnet ist, mit mindestens einer ersten Lichtquelle (6), einem elektrischen Energiespeicher (10) und einer Schaltervorrichtung (12), die eine eine Sensoreinheit (14) umfassende Steuereinheit (16) aufweist, mit der bei Berühren eines ersten Sensormittels (18) der Sensoreinheit (14) und/oder bei Erfassen einer Bewegung durch das erste Sensormittel (18) eine erste Schalteinheit (20) von einem offenen Schaltzustand in einen geschlossenen Schaltzustand überführbar ist oder überführt wird, in welchem die erste Lichtquelle (6) durch den elektrischen Energiespeicher (10) mit elektrischer Energie versorgbar oder versorgt ist, so dass der öffenbare und wieder verschließbare Gegenstand seine Umgebung beleuchtet und erkennbar wird, wobei der öffenbare und wieder verschließbare Gegenstand (4) eine Behältniseinrichtung zum Anordnen mindestens eines Körperelements, wie Medikamente, Zahlungsmittel, Mittel zur Körper- und Schönheitspflege und/oder sonstige Gegenstände, bildet, **dadurch gekennzeichnet, dass** die Sensoreinheit (14) ein zweites Sensormittel (22) aufweist, das zumindest erkennt, ob der öffenbare und wieder verschließbare Gegenstand (4) offen oder geschlossen ist und dass durch die Steuereinheit (16) eine zweite Schalteinheit (24) von einem offenen Schaltzustand in einen geschlossenen Schaltzustand überführbar ist oder überführt wird, in welchem die erste Lichtquelle (6) und/oder eine zweite Lichtquelle (8) durch den elektrischen Energiespeicher (10) mit elektrischer Energie versorgbar ist oder versorgt wird, so dass die erste Lichtquelle (6) und/oder die zweite Lichtquelle (8) mit elektrischer Energie versorgt wird, wenn der öffenbare und wieder verschließbare Gegenstand geöffnet wird und dass der öffenbare und wieder verschließbare Gegenstand in einer Handtasche anordnenbar ist.

2. Beleuchtungseinrichtung (2) nach Anspruch 1, **dadurch gekennzeichnet, dass** das zweite Sensormittel (22) der Sensoreinheit (14) einen Schalterdrücker und/oder einen Hall-Sensor und/oder einen Reed-Kontakt umfasst.

3. Beleuchtungseinrichtung (2) nach Anspruch 1 oder 2, **dadurch gekennzeichnet, dass** das erste Sensormittel (18) der Sensoreinheit (14) funktional der ersten Lichtquelle (6) und das zweite Sensormittel (22) der Sensoreinheit (14) funktional der zweiten Lichtquelle (8) zugeordnet ist und dass die Steuereinheit (16) derart ausgebildet ist, dass sie die erste Schalteinheit (20) von einem geschlossenen Schaltzustand in einen offenen Schaltzustand überführt, wenn die zweite Schalteinheit (24) von einem offenen Schaltzustand in einen geschlossenen Schaltzustand überführt wird.

4. Beleuchtungseinrichtung (2) nach einem oder mehreren der vorhergehenden Ansprüche, **dadurch gekennzeichnet, dass** das zweite Sensormittel (22) der Sensoreinheit (14) einen Helligkeitssensor umfasst und dass die Steuereinheit (16) derart ausgebildet ist, dass sie die zweite Schalteinheit (24) von einem geschlossenen Schaltzustand in einen offenen Schaltzustand überführt, wenn durch den Helligkeitssensor eine Helligkeit von mehr als 100 Lux, insbesondere mehr als 80 Lux, insbesondere mehr als 50 Lux, bevorzugt mehr als 40 Lux erfasst wird.

5. Beleuchtungseinrichtung (2) nach einem oder mehreren der vorgehenden Ansprüche, **dadurch gekennzeichnet, dass** das erste Sensormittel (18) der Sensoreinheit (14) einen Pyrosensor und/oder einen kapazitiven Sensor und/oder einen Ultraschallsensor zum Erkennen einer Bewegung und/oder zum Erkennen einer Berührung der Schaltervorrichtung (12) umfasst.

6. Beleuchtungseinrichtung (2) nach einem oder mehreren der vorgehenden Ansprüche, **dadurch gekennzeichnet, dass** die Steuereinheit (16) derart ausgebildet ist, dass sie die zweite Schalteinheit (24) von dem geschlossenen Schaltzustand in den offenen Schaltzustand nach 5 bis 60 Sekunden, insbesondere nach 10 bis 40 Sekunden, insbesondere nach 10 bis 30. Sekunden nach Erkennen eines Öffnens des Gegenstands (4) durch das zweite Sensormittel (22) der Sensoreinheit (14) zurückführt und/oder dass die Steuereinheit (16) derart ausgebildet ist, dass sie die erste Schalteinheit (24) von dem geschlossenen Schaltzustand in den offenen Schaltzustand nach 5 bis 60 Sekunden, insbesondere nach 10 bis 40 Sekunden, insbesondere nach 15 bis 30 Sekunden nach Erfassen der letzten Bewegung durch das erste Sensormittel (18) der Sensoreinheit (14) zurückführt.

7. Beleuchtungseinrichtung (2) nach einem oder mehreren der vorgehenden Ansprüche, **dadurch gekennzeichnet, dass** die erste Lichtquelle (6) und/oder die zweite Lichtquelle (8) jeweils zumindest eine Glühwendellampe, LED und/oder Leuchtfolie umfasst, insbesondere eine Mehrzahl an Glühwendellampen, LED und/oder Leuchtfolien umfasst.

8. Beleuchtungseinrichtung (2) nach einem oder mehreren der vorgehenden Ansprüche, **dadurch gekennzeichnet, dass** sie einen durch die Steuereinheit (16) ansteuerbaren Dimmer aufweist, mit dem die Energieversorgung der ersten Lichtquelle (6) und/oder zweiten Lichtquelle (8) abrupt oder kontinuierlich bis auf 0 reduzierbar ist, insbesondere innerhalb von einer Sekunde bis 2 Minuten, insbesondere innerhalb von 10 Sekunden bis 90 Sekunden, insbesondere innerhalb von 10 Sekunden bis 60 Sekunden.

9. Beleuchtungseinrichtung (2) nach einem oder mehreren der vorgehenden Ansprüche, **dadurch gekennzeichnet, dass** der öffenbare und wieder verschließbare Gegenstand (4) ein transparentes und/oder ein transluzentes und/oder opakes Material umfasst und dass die erste Lichtquelle (6) und/oder die zweite Lichtquelle (8) innerhalb des Materials des öffenbaren und wieder verschließbaren Gegenstands (4) angeordnet und bevorzugt von diesem umschlossen sind.

10. Beleuchtungseinrichtung (2) nach einem oder mehreren der vorhergehenden Ansprüche, **gekennzeichnet durch** ein Anzeigeelement zum Anzeigen mindestens einer Information und/oder **dadurch**, dass die erste Lichtquelle (6) und/oder die zweite Lichtquelle (8) ein Anzeigeelement zum Anzeigen mindestens einer Information bilden.

11. Beleuchtungseinrichtung (2) nach Anspruch 10, **dadurch gekennzeichnet, dass** das Anzeigeelement über die erste Schalteinheit (20) und/oder über die zweite Schalteinheit (24) mit dem elektrischen Energiespeicher (10) verbindbar ist und/oder dass die mindestens eine Information eine Uhrzeit, ein Datum und/oder ein Signal, insbesondere akustisches Alarmsignal, umfasst.

12. Beleuchtungseinrichtung (2) nach Anspruch 10 oder 11, **dadurch gekennzeichnet, dass** das Anzeigeelement ein akustisches, optisches und/oder haptisch wahrnehmbares Anzeigen der Information umfasst.

13. Beleuchtungseinrichtung (2) nach einem oder mehreren der vorhergehenden Ansprüche, **gekennzeichnet durch** eine Datenspeichereinrichtung, die im oder am öffenbaren und wieder verschließbaren Gegenstand (4) anordenbar oder angeordnet ist und auf der mittels einer Schnittstelleneinheit mindestens einem Datum übertragbar und/oder speicherbar ist.

14. Verwendung einer Beleuchtungseinrichtung (2), nach einem der vorangehenden Ansprüche.

## Claims

1. An illuminating device (2) that can also be put into operation while being transported and that is arranged inside an openable and reclosable object (4), with at least one first light source (6), an electrical energy storage (10) and a switching apparatus (12) having a control unit (16) comprising a sensor unit (14) with which on touching a first sensor means (18) of the sensor unit (14) and/or on detecting a movement through the first sensor means (18) a first switching unit (20) can be transferred or is transferred from an open switching state into a closed switching state in which the first light source (6) can be supplied or is supplied with electrical energy by the electrical energy storage (10) so that the openable and reclosable object illuminates its surroundings and becomes visible, wherein the openable and reclosable object (4) forms a receptacle device for arranging at least one body element, such as pharmaceuticals, means of payment, cosmetics and/or other objects, **characterized in that** the sensor unit (14) has a second sensor means (22) that at least detects whether the openable and reclosable object (4) is open or closed, and that through the control unit (16) a second switching unit (24) can be transferred or is transferred from an open switching state into a closed switching state in which the first light source (6) and/or a second light source (8) can be supplied or is supplied with electrical energy by the electrical energy storage (10), so that the first light source (6) and/or the second light source (8) are supplied with electrical energy when the openable and reclosable object is opened and that the openable and reclosable object can be arranged inside a handbag.

2. The illuminating device (2) according to claim 1, **characterized in that** the second sensor means (22) of the sensor unit (14) comprises a push button and/or a Hall sensor and/or a reed contact.

3. The illuminating device (2) according to claim 1 or 2, **characterized in that** the first sensor means (18) of the sensor unit (14) is functionally assigned to the first light source (6) and the second sensor means (22) of the sensor unit (14) is functionally assigned to the second light source (8) and that the control unit (16) is designed such that it transfers the first switching unit (20) from a closed switching state into an open switching state if the second switching unit (24) is transferred from an open switching state into a closed switching state.

4. The illuminating device (2) according to one or several of the preceding claims, **characterized in that** the second sensor means (22) of the sensor unit (14) comprises a brightness sensor and that the control unit (16) is designed such that it transfers the second switching unit (24) from a closed switching state into an open switching state if a brightness of more than 100 lux, in particular more than 80 lux, in particular more than 50 lux, preferably more than 40 lux, is detected by the brightness sensor.

5. The illuminating device (2) according to one or several of the preceding claims, **characterized in that** the first sensor means (18) of the sensor unit (14) comprises a pyroelectric sensor and/or a capacitive sensor and/or an ultrasonic sensor for detecting a movement and/or for detecting a touch of the switching apparatus (12).

6. The illuminating device (2) according to one or several of the preceding claims, **characterized in that** the control unit (16) is designed such that it transfers the second switching unit (24) from the closed switching state back into the open switching state after 5 to 60 seconds, in particular after 10 to 40 seconds, in particular after 10 to 30 seconds after the opening of the object (4) has been detected by the second sensor means (22) of the sensor unit (14) and/or that the control unit (16) is designed such that it transfers the first switching unit (24) from the closed switching state back into the open switching state after 5 to 60 seconds, in particular after 10 to 40 seconds, in particular after 15 to 30 seconds after the last movement has been detected by the first sensor means (18) of the sensor unit (14).

7. The illuminating device (2) according to one or several of the preceding claims, **characterized in that** the first light source (6) and/or the second light source (8) each comprise at least one filament lamp, LED and/or electroluminescent film, in particular a plurality of filament lamps, LEDs and/or electroluminescent films.

8. The illuminating device (2) according to one or several of the preceding claims, **characterized in that** it comprises a dimmer that is controllable by the control unit (16) and can be utilised to reduce the energy supply to the first light source (6) and/or the second light source (8) abruptly or continuously down to 0, in particular within a range of one second to 2 minutes, in particular within a range of 10 seconds to 90 seconds, in particular within a range of 10 seconds to 60 seconds.

9. The illuminating device (2) according to one or several of the preceding claims, **characterized in that** the openable and reclosable object (4) comprises a transparent and/or translucent and/or opaque material and that the first light source (6) and/or the second light source (8) are arranged within the material of the openable and reclosable object (4) and preferably enclosed by said material.

10. The illuminating device (2) according to one or several of the preceding claims, **characterized by** a display element for displaying at least one item of information and/or in that the first light source (6) and/or the second light source (8) form a display element for displaying at least one item of information.

11. The illuminating device (2) according to claim 10, **characterized in that** the display element can be connected to the electrical energy storage (10) via the first switching unit (20) and/or the second switching unit (24) and/or that the at least one item of information comprises a time, a date and/or a signal, in particular an acoustic alarm signal.

12. The illuminating device (2) according to claim 10 or 11, **characterized in that** the display element comprises an acoustic, optical and/or haptically perceptible display of the information.

13. The illuminating device (2) according to one or several of the preceding claims, **characterized by** a data storage device that can be arranged or is arranged in or on the openable and reclosable object (4) and to which an item of data can be transferred by means of an interface unit and/or on which said item of data can be stored.

14. Utilisation of an illuminating device (2) according to any one of the preceding claims.

## Revendications

1. Dispositif d'éclairage (2), lequel peut être mis en service également pendant son transport et est disposé dans un objet (4) ouvrable et refermable, avec au moins une première source de lumière (6), un accumulateur d'énergie électrique (10) et un dispositif de commutation (12), lequel présente une unité de commande (16) comprenant une unité de capteur (14), avec laquelle, lors du contact d'un premier moyen de détection (18) de l'unité de capteur (14) et/ou lors de la détection d'un mouvement par le premier moyen de détection (18), une première unité de commande (20) peut être fait passer ou est fait passer d'un état de commutation ouvert à un état de commutation fermé, dans lequel la première source de lumière (6) est alimentable ou alimentée avec de l'énergie électrique par l'accumulateur d'énergie électrique (10), de telle sorte que l'objet ouvrable et refermable éclaire son environnement et est reconnaissable, l'objet (4) ouvrable et refermable formant un dispositif contenant pour le placement d'au moins un élément formant corps, tel que médicaments, moyens de paiement, moyens de soins du corps et cosmétiques et/ou autres objets, **caractérisé en ce que** l'unité de capteur (14) présente un deuxième moyen de détection (22), reconnaissant au moins si l'objet (4) ouvrable et refermable est ouvert ou fermé et **en ce que**, par l'unité de commande (16), une deuxième unité de commutation (24) peut être fait passer ou est fait passer d'un état de commutation ouvert à un état de commutation fermé, dans lequel la première source de lumière (6) et/ou une deuxième source de lumière (8) est alimentable ou alimentée avec de l'énergie électrique par l'accumulateur d'énergie électrique (10), de telle sorte que la première source de lumière (6) et/ou la deuxième source de lumière (8) est alimentée avec de l'énergie électrique lorsque l'objet ouvrable et refermable est ouvert, et **en ce que** l'objet ouvrable et refermable est disposable dans un sac à main.

2. Dispositif d'éclairage (2) selon la revendication 1, **caractérisé en ce que** le deuxième moyen de détection (22) de l'unité de capteur (14) comprend un bouton interrupteur et/ou un capteur à effet Hall et/ou un contact Reed.

3. Dispositif d'éclairage (2) selon la revendication 1 ou 2, **caractérisé en ce que** le premier moyen de détection (18) de l'unité de capteur (14) est attribué fonctionnellement à la première source de lumière (6) et le deuxième moyen de détection (22) de l'unité de capteur (14) est attribué fonctionnellement à la deuxième source de lumière (8), et **en ce que** l'unité de commande (16) est formée de telle sorte que la première unité de commutation (20) est fait passer d'un état de commutation fermé à un état de commutation ouvert lorsque la deuxième unité de commande (24) est fait passer d'un état de commutation ouvert à un état de commutation fermé.

4. Dispositif d'éclairage (2) selon une ou plusieurs des revendications précédentes, **caractérisé en ce que** le deuxième moyen de détection (22) de l'unité de capteur (14) comprend un capteur de luminosité et **en ce que** l'unité de commande (16) est formée de telle sorte qu'elle fait passer la deuxième unité de commutation (24) d'un état de commutation fermé à un état de commutation ouvert lorsqu'une luminosité supérieure à 100 Lux, en particulier supérieure à 80 Lux, en particulier supérieure à 50 Lux, de préférence supérieure à 40 Lux est détectée par le capteur de luminosité.

5. Dispositif d'éclairage (2) selon une ou plusieurs des revendications précédentes, **caractérisé en ce que** le premier moyen de détection (18) de l'unité de capteur (14) est un capteur pyroélectrique et/ou un capteur capacitif et/ou un capteur à ultrasons, pour la détection d'un mouvement et/ou la détection d'un contact avec le dispositif de commutation (12).

6. Dispositif d'éclairage (2) selon une ou plusieurs des revendications précédentes, **caractérisé en ce que** l'unité de commande (16) est formée de telle sorte qu'elle fait repasser la deuxième unité de commutation (24) de l'état de commutation fermé à l'état de commutation ouvert après 5 à 60 secondes, en particulier après 10 à 40 secondes, en particulier après 10 à 30 secondes, après la détection d'une ouverture de l'objet (4) par le deuxième moyen de détection (22) de l'unité de capteur (14), et/ou en ce que l'unité de commande (16) est formée de telle sorte qu'elle fait repasser la première unité de commutation (24) de l'état de commutation fermé à l'état de commutation ouvert après 5 à 60 secondes, en particulier après 10 à 40 secondes, en particulier après 15 à 30 secondes, après la détection du dernier mouvement par le premier moyen de détection (18) de l'unité de capteur (14).

7. Dispositif d'éclairage (2) selon une ou plusieurs des revendications précédentes, **caractérisé en ce que** la première source de lumière (6) et/ou la deuxième source de lumière (8) comprend au moins une lampe à filament incandescent, une LED et/ou une feuille électroluminescente, en particulier une multiplicité de lampes à filament incandescent, de LED et/ou de feuilles électroluminescentes.

8. Dispositif d'éclairage (2) selon une ou plusieurs des revendications précédentes, **caractérisé en ce qu'**il présente un variateur commandable par l'unité de commande (16), avec lequel l'alimentation en énergie de la première source de lumière (6) et/ou de la deuxième source de lumière (8) peut être réduite jusqu'à 0 de façon abrupte ou continue, en particulier dans un délai de 1 seconde à 2 minutes, en particulier dans un délai de 10 secondes à 90 secondes, en particulier dans un délai de 10 secondes à 60 secondes.

9. Dispositif d'éclairage (2) selon une ou plusieurs des revendications précédentes, **caractérisé en ce que** l'objet (4) ouvrable et refermable comprend un matériau transparent et/ou translucide et/ou opaque, et **en ce que** la première source de lumière (6) et/ou la deuxième source de lumière (8) est disposée dans le matériau de l'objet (4) ouvrable et refermable et est de préférence entourée par celui-ci.

10. Dispositif d'éclairage (2) selon une ou plusieurs des revendications précédentes, **caractérisé par** un élément d'affichage pour l'affichage d'au moins une information et/ou en ce que la première source de lumière (6) et/ou la deuxième source de lumière (8) forment un élément d'affichage pour l'affichage d'au moins une information.

11. Dispositif d'éclairage (2) selon la revendication 10, **caractérisé en ce que** l'élément d'affichage est connectable avec l'accumulateur d'énergie électrique (10) par la première unité de commande (20) et/ou par la deuxième unité de commande (24), et/ou **en ce que** l'au moins une information comprend une heure, une date et/ou un signal, en particulier un signal d'alarme sonore.

12. Dispositif d'éclairage (2) selon la revendication 10 ou 11, **caractérisé en ce que** l'élément d'affichage comprend un affichage de l'information qui peut être perçu de façon auditive, optique et/ou tactile.

13. Dispositif d'éclairage (2) selon une ou plusieurs des revendications précédentes, **caractérisé par** un dispositif de stockage des données qui est dlsposable ou disposé dans ou contre l'objet (4) ouvrable et refermable et sur lequel, au moyen d'une unité d'interface, au moins une pièce de données est transférable et/ou stockable.

14. Utilisation du dispositif d'éclairage (2) selon l'une des revendications précédentes.
